# EUROPEAN PATENT APPLICATION

(11) **EP 2 282 415 A2**
(43) Date of publication of application: **09.02.2011**
(21) Application number: 10168781.2
(22) Date of filing: 07.07.2010
(51) Int. Cl.: H04B 7/06, H04B 7/08, H04B 7/04, H04L 5/00, H04W 72/04

(54) **Allocating traffic in wide area mobile networks**

(30) Priority: 07.07.2009 ES 200930422
(71) Applicant: Vodafone Group PLC, Newbury Berkshire RG14 2FN (GB); Vodafone España, S.A.U., 28108 Alcobendas (ES)
(72) Inventor: De Pasquale, Andrea, E-28050, Madrid (ES); Exadaktylos, Kyriakos, E-28050, Madrid (ES); Alcazar Viguera, Esperanza, 28050, Madrid (ES); Diaz Mateos, Maria, 28050, Madrid (ES); Garriga Muñiz, Beatriz, E-28050, Madrid (ES); Dominguez Romero, Francisco, E-28050, Madrid (ES); McWilliams, Brendan, E-28050, Madrid (ES); Urbano Ruiz, Julio, E-28050, Madrid (ES); Serrano Solsana, Clara, E-28050, Madrid (ES); López Roman, Javier, E-28050, Madrid (ES); García Viñas, Aitor, E-28050, Madrid (ES); Tenorio Sanz, Santiago, E-28050, Madrid (ES); Le Pezennec, Yannick, E-28050, Madrid (ES)
(74) Representative: Keston, David Arthur

(57) **Abstract**

Method and RNC for selecting a transmission technology to MIMO UEs, HSDPA UEs and non-HSDPA UEs of a network with multiple carriers, comprising:
- checking whether the UE is a MIMO UE;
- using STTD on at least one radio carrier and allocating MIMO traffic to it,
- checking whether the UE is a HSDPA UE vulnerable to STTD and comparing the radio conditions with at least one quality threshold, and
- if the UE is vulnerable to STTD and the radio conditions are equal to or higher than the first quality threshold (good radio conditions), allocating its traffic to any of the remaining radio carriers free of MIMO traffic;
- if the UE is vulnerable to STTD and the radio conditions are lower than the first quality threshold (medium or bad radio conditions), allocating its traffic to any carrier on a frequency selection basis, for example, relative load among carriers.

## Description

### TECHNICAL FIELD OF THE INVENTION

The present invention relates to a method and a network controller for allocating traffic to a plurality of radio carriers in wide area telecommunications networks and, especially, in the industrial area engaged in providing Radio Network Controllers (RNCs) with traffic allocation means and policies for the different user equipments (UEs) in the Radio Access Network (RAN) of wireless communications systems.

More specifically, it relates to wireless communications systems supporting HSDPA (High Speed Downlink Packet Access) and MIMO (Multiple Input Multiple Output) technologies.

### BACKGROUND OF THE INVENTION

HSDPA is a packet-based data service in the 3rd generation W-CDMA (Wideband CDMA) systems, which provides high-speed data transmission (up to 8-10 Mbps over a 5MHz bandwidth) in CDMA to support multimedia services. This system is evolved from and backward compatible with Release 99 (Rel'99) WCDMA systems,

In order to reach higher peak rate (up to 28 Mbps at Physical layer), MIMO technology is used, in which multiple antennas are implemented at both base stations (Nodes B) and mobile terminals (UE: User Equipment).

MIMO technology is specified by the 3rd Generation Partnership Project (3GPP), which describes MIMO techniques which are considered as 3G mobile standard techniques.

MIMO terminals have to coexist with other terminals like Rel'99 and HSDPA terminals.

MIMO terminals are a special category of the HSDPA terminals, but for simplicity here HSDPA terminals refers to terminals supporting HSDPA but not supporting MIMO technology.

The 3GPP classifies HSDPA mobile terminals into 12 categories according to their data transmission capability, as listed in Table 1 (The TTI refers to the minimum transmission time interval which is allocated to the mobile terminal for receiving data.

The values in the Table 1 indicate HSDPA categories specified in 3GPP Release 7 (additional categories have been specified in Release 8).

**Table 1**

| **HS-DSCH category** | **Maximum number of HS DSCH codes received** | **Minimum inter-TTI interval** | **Maximum number of bits of an HS-DSCH transport block received within an HS-DSCH TTI** | **Total number of soft channel bits** | **Supported modulations without MIMO operation** | **Supported modulations simultaneous with MIMO operation** |
|---|---|---|---|---|---|---|
| Category 1 | 5 | 3 | 7298 | 19200 | | (MIMO not |
| | | | | | | supported) |
| Category 2 | 5 | 3 | 7298 | 28800 | | (MIMO not |
| | | | | | | supported) |
| Category 3 | 5 | 2 | 7298 | 28800 | | (MIMO not |
| | | | | | | supported) |
| Category 4 | 5 | 2 | 7298 | 38400 | | (MIMO not |
| | | | | | | supported) |
| Category 5 | 5 | 1 | 7298 | 57600 | | (MIMO not |
| | | | | | | supported) |
| Category 6 | 5 | 1 | 7298 | 67200 | | (MIMO not |
| | | | | | | supported) |
| Category 7 | 10 | 1 | 14411 | 115200 | | (MIMO not |
| | | | | | | supported) |
| Category 8 | 10 | 1 | 14411 | 134400 | | (MIMO not |
| | | | | | | supported) |
| Category 9 | 15 | 1 | 20251 | 172800 | | (MIMO not |
| | | | | | | supported) |
| Category 10 | 15 | 1 | 27952 | 172800 | | (MIMO not |
| | | | | | QPSK, 16QAM | supported) |
| Category 11 | 5 | 2 | 3630 | 14400 | | (MIMO not |
| | | | | | | supported) |
| Category 12 | 5 | 1 | 3630 | 28800 | QPSK | supported) |
| Category 13 | 15 | 1 | 35280 | 259200 | QPSK, | (MIMO not |
| | | | | | 16QAM, | supported) |
| Category 14 | 15 | 1 | 42192 | 259200 | 64QAM | supported) |
| Category 15 | 15 | 1 | 23370 | 345600 | | |
| Category 16 | 15 | 1 | 27952 | 345600 | QPSK, 16QAM | |
| | | | | | QPSK, | |
| | | | | | 16QAM, | |
| | | | 35280 | 259200 | 64QAM | - |
| Category 17 | 15 | 1 | 23370 | 345600 | - | QPSK, 16QAM |
| | | | | | QPSK, | |
| | | | | | 16QAM, | |
| | | | 42192 | 259200 | 64QAM | - |
| Category 18 | 15 | 1 | 27952 | 345600 | - | QPSK, 16QAM |

At the transmitter of MIMO terminals and Nodes B, the information bits are divided into several bit streams and transmitted through different antennas. The transmitted information are recovered from the received signals at multiple receive antennas by using an advanced receiver.

Commonly, in MIMO systems, two parallel data flows at the same transmission power are simultaneously transmitted in the downlink (DL) from two Power Amplifiers (PAs).

The receiver is able to determine which transmitter antenna the received signal comes from, as long as different pilots are used per each PA.

There are two ways specified by the 3GPP in order to guarantee this PA diversity: one is to transmit the Primary Common Pilot Channel (P-CPICH) on one of the two power amplifiers (PA1) and a Diversity P-CPICH on the other one (PA2); another option is to transmit the P-CPICH on PA1 but to send a Secondary Common Pilot Channel (S-CPICH) from PA2.

An efficient usage of Radio Resources when MIMO is activated in the system requires that both PAs utilize the same amount of power even when non-MIMO traffic is present. This is called power amplifier balancing.

In order to ensure PA balancing, MIMO is coupled with the activation of Transmit Diversity modes for all the channels transmitted on a cell (i.e., to be used when transmitting data to existing Rel'99 and legacy HSDPA terminals):
- Space time transmit diversity (STTD) utilizes space-time block code (STBC) in order to exploit redundancy in multiply transmitted versions of a signal, that is, the two antennas transmit the same information but each one uses a different coding scheme.
- Time-switched transmit diversity (TSTD) uses the information fed back to the transmitter, which decides which one of is antennas is used to transmit each time, and the receiver checks the quality each transmitter antenna (transmitting alternatively) is received with.
- Closed-loop feedback transmit diversity (CLTD) applies a weight W by which one of the two antennas is rotated with respect to the other one, so that coherent combination is achieved at the UE antenna input and the same data stream are transmitted on both antennas without any coding.

The support of the aforementioned Diversity Techniques is specified as mandatory for all user equipment (UE). A dedicated channel being transmitted in any transmit diversity mode may convey the same data, but the transmissions from the two antennas carry a different pilot signal (over a so-called Diversity Common Pilot Channel).

There are other possible approaches to grant power balancing: One solution consists of using an additional carrier (having available one carrier on the first PA and a second carrier on a second PA) paired with a load balancing between carriers. Another way is the Virtual Antenna Mapping described below.

UTRA MIMO Extension 25.876, version 1.80 specifies several transmission mode proposals intended for application with HSDPA, including the so called "MIMO with Virtual Antenna mapping" which adaptively selects the number of antennas from which to transmit as well as selects the best subset of antennas for the selected transmission mode. Virtual Antenna mapping improves the balance of the transmission powers from the two PAs in the low SNR (signal to noise ratio) region. MIMO with Virtual Antenna mapping does not require Diversity CPICH but uses the S-CPICH (Secondary Common Pilot Channel) defined in the UTRAN.

Summarizing, MIMO transmission needs the usage of two PAs and the availability of a diversity pilot (one per each PA), which can be provided by the usage of either a Diversity CPICH (with STTD transmission mode) or a S-CPICH (with Virtual Antenna mapping).

Utilization of STTD as a Diversity Technique has been chosen by the 3GPP as the main technique to be used together with MIMO.

However, some trial measurements carried in field by mobile network operators have shown that the STTD activation significantly decreases the performance of some categories of HSDPA terminals already in the market, particularly those ones of category 7 or category 8, when the terminals are operating in both good and medium radio conditions. Performances in good radio conditions are precisely those that allow reaching the highest peak rates offered by the mobile network operators.

The aforementioned problem is linked to the fact that the HSDPA UEs of categories 7 and 8 use a Type 2 receiver (single receiving antenna and equalizer) or a Type 3 receiver (dual receiving x antenna and equalizer), in order to boost the DL peak rate in good radio conditions, but the utilization of STTD with these family or receivers provokes an associated peak rate performance lower than the case in which STTD is not used.

This calls for a solution in order to manage the allocation of the diverse terminals across different and possible configurations.

### SUMMARY OF THE INVENTION

The present invention serves to solve the aforesaid problem by defining specific policies for traffic allocation among a plurality of available carriers in a wide area mobile network supporting MIMO technology. The selection of the carrier to allocate the traffic from the different User Equipments (UEs) which can coexist in the network (MIMO UEs, HSDPA UEs and non-HSDPA or Rel'99 UEs) is network based and aims to avoid the allocation of HSDPA terminals to a radio carrier in which transmit diversity by STTD is currently used.

For this purpose, the load of traffic from the UEs on the carriers, and the number and the type of UEs existing in the network are taken into account by the radio network controller (RNC) when a new UE enters the network.

This goal is achieved by allocating as much as possible the HSDPA UEs that are vulnerable to STTD on a radio carrier, in which STTD is neither used nor needed.

HSDPA UEs are defined by the operator as vulnerable to STTD according to their UE category; such a definition is flexible and can be changed via parameter by an operator. As an example here, standardized categories 1, 2, 3, 4, 5, 11 and 12 are defined as non-vulnerable to STTD, corresponding categories 6-10 to UEs which are vulnerable to STTD.

The present solution allows STTD activation for MIMO users whilst maintaining the performances of the legacy HSDPA terminals.

In addition, radio conditions in which each UE is working are also considered by the RNC to carry out the traffic allocation into the multiple carriers.

Radio conditions are determined according to measurements of certain parameters: the received signal code power (RSCP) and energy per chip to noise density ratio (Ec/No), which are available at RNC level, and channel quality indicator (CQI), available at NodeB level and which can be made available at the RNC by sending a periodical average measurement across the IuB from the NodeB to the RNC.

Radio conditions are evaluated according to configurable thresholds by operator. In the context of the present invention, Good / Medium / Bad can be distinguished.

Radio conditions are evaluated by the RNC at call set-up as well as periodically during the call, in order to optimize the matching between carrier loads and Experienced Radio conditions.

The RNC in communication with the UE (which can be MIMO, HSDPA or non-HSDPA type) decides on a connection basis (at call set-up and during the call) the radio carrier to be used by each type of terminal, following a Radio Resource Management (RRM) policy described below.

The network configuration to be considered in the RRM is the following:
- Two or more radio carriers are available for traffic allocation
- At least one carrier (f1) is not using STTD
- STTD is used by at least one carrier (f2)
- STTD provides diversity pilot (Diversity CPICH) for the MIMO system and, at the same time, power balancing between the two power amplifiers (PA1, PA2).
- For the additional radio carriers, the power balancing is created either by using Virtual Antenna Mapping for transmission mode of traffic on at least a second carrier (Virtual Antenna Mapping approach is out of scope of this invention), or by allocating and load balance carriers allocated alternatively to PA1 and PA2.

In a network scenario with just two carriers (f1, f2), assuming that STTD is active in carrier f2 and used for all MIMO traffic as well as other traffic, and carrier f1 does not use any Transmit Diversity Technique and so no MIMO traffic is allocated to f1, the proposed traffic allocation policy comprises:
1) Allocating to the carrier with STTD active (f2) the traffic from the following user equipments which can coexist in the network:
   - MIMO traffic using STTD as a diversity technique
   - HSPA UEs vulnerable to STTD with Bad Radio conditions
   - HSPA UEs vulnerable to STTD with Medium Radio conditions if the other carrier (f1) has met high load conditions and f2 has not.
   - Rel'99 traffic (i.e. non HSPA traffic, "CS" or "PS" traffic), as per operator selection and load
   - HSDPA UEs non vulnerable to STTD (as per operator selection and load)
2) Allocating to the carrier without STTD active (f1) the traffic from the following user equipments which can coexist in the network:
   - HSPA UEs vulnerable to STTD that are in Good radio conditions
   - HSPA UEs vulnerable to STTD with Medium Radio conditions if high load condition for f1 has not been met
   - Rel'99 traffic (i.e. non HSPA traffic, "CS" or "PS" traffic), as per operator selection and load
   - HSDPA UEs non vulnerable to STTD (as per operator selection and load)

An aspect of the invention refers to a method for selecting a transmission technology for communications in a wide area mobile network which provides a plurality of available radio carrier for allocating traffic of coexisting MIMO User Equipments, HSDPA User Equipments and non-HSDPA User Equipments, comprising the following steps:
- measuring radio condition parameters of the User Equipment,
- measuring load of the radio carriers,
- checking whether the User Equipment is a MIMO User Equipment;
   - using STTD on at least one radio carrier and allocating all existing MIMO traffic to said at least one radio carrier,
   - checking whether the User Equipment is a HSDPA User Equipment of a certain category and comparing the radio condition measurements of the User Equipment with a first quality threshold, and
      - if the User Equipment belongs to a category of HSDPA User Equipment identified by the operator as being vulnerable to STTD and the radio condition measurements are equal to or higher than the first quality threshold, allocating the traffic of the User Equipment to any of the remaining radio carriers free of MIMO traffic;
      - if the User Equipment belongs to a category of HSDPA User Equipment identified by the operator as being vulnerable to STTD and the radio conditions measurements are lower than the first quality threshold, allocating the traffic of the User Equipment to either the carrier using STTD or to any of the remaining radio carriers free of MIMO traffic depending on a relative load among carriers.

Additional quality thresholds can be configured for distinguishing medium and bad radio conditions from good ones.

Thus, the measured radio condition parameters of the User Equipment can be further compared with a second quality threshold which is lower than the first quality threshold. If the radio conditions measurements are equal to or higher than the first quality threshold, this indicates that the User Equipment is currently operating in good radio conditions). If the radio conditions measurements are lower than the second quality threshold, this indicates bad radio conditions. Intermediate cases correspond to medium radio conditions. Then, the method further comprises:
- If the User Equipment belongs to a category of HSDPA User Equipment identified by the operator as vulnerable to STTD and the radio conditions measurements are higher or equal than the second quality threshold and lower than the first quality threshold, allocating the traffic of the User Equipment to any of the carriers not using STTD, unless the relative load of the non-STTD carriers (i.e., carriers free of MIMO traffic) is significantly higher than the load of the STTD carrier. Also, in this case, the method comprises periodically comparing the measured radio condition of the User Equipment with the two quality thresholds and periodically checking relative load among carriers.
- If the User Equipment belongs to a category of HSDPA User Equipment identified by the operator as being vulnerable to STTD and the radio condition measurements are lower than the second quality threshold, allocating the traffic of the User Equipment to the carrier using STTD, unless this carrier is busy.

Another aspect of the invention deals with a radio network controller (RNC) comprising processing means for performing the method described before.

A last aspect of the invention deals with a computer program comprising program code means which execute the method described before, when loaded into processing means of the radio network controller defined above.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a flow chart of traffic allocation between two carriers, according to a preferred embodiment of the invention.
Figure 2. - It shows a flow chart of traffic allocation between three carriers, according to a preferred embodiment of the invention.

### DETAILED DESCRIPTION OF THE INVENTION

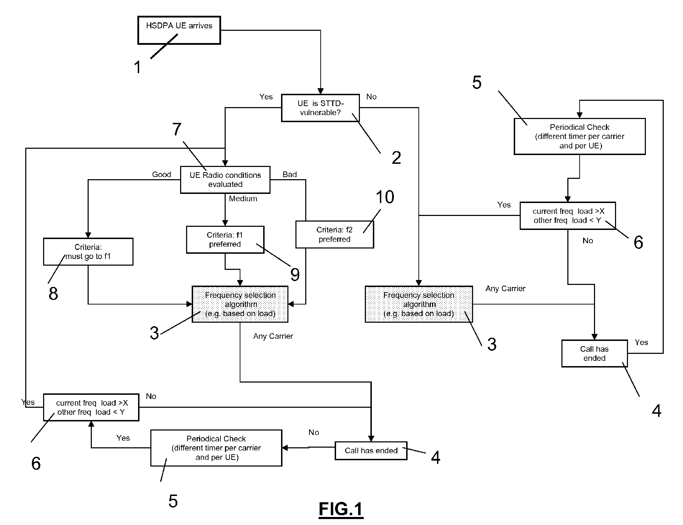

In a network scenario with two carriers, f1, f2, being f1 a carrier free of MIMO traffic and f2 a carrier using STTD for diversity provision to MIMO traffic, Figure 1 shows a flow diagram of the steps followed when a HSDPA User Equipment arrives 1 to the RNC with a call set-up. This RNC checks 2 whether the HSDPA User Equipment is vulnerable to STTD, i.e., checking the HSDPA UE category.

In case of belonging to a non-vulnerable to STTD category, e.g., categories 1-5, category 11 or 12, the RNC uses an existing frequency selection algorithm 3, for example, based on the current load of the available carriers, f1 and f2. In addition, whichever the selected carrier for allocation of the call traffic is, f1 or f2, the RNC periodically checks 5 the relative load between these carriers, until the call ends 4. The period for said load checking 5 can be configured per carrier and per type of User Equipment by the network operator at the RNC. If certain conditions of relative load between carriers are reached 6, (the current load of the carrier to which the call traffic is allocated exceeds a threshold, while the load of the other carrier is below another threshold) the RNC can reallocate the call by using the frequency selection algorithm 3.

In case that the HSDPA User Equipment is vulnerable to STTD, e.g., its category belongs to the set of standard categories 6-10, the RNC evaluates the radio conditions 7. The current radio conditions of the User Equipment can be good, medium or bad, in accordance to the current values of the radio condition parameters, i.e., RSCP, Ec/No and CQI, measured or estimated by the RNC.

In case that the vulnerable to STTD HSDPA User Equipment is currently working in good radio conditions 8, the traffic is allocated to the carrier free of MIMO traffic, f1, using the frequency selection algorithm 3 provided by the RNC to balance the load between carriers. If the radio conditions of the User Equipment are medium or bad, the traffic can be allocated to any of the two carriers, f1 or f2, but f1 is preferred in case of medium radio conditions 9 and f2 is preferred in case of bad radio conditions 10. The load checking 5 is performed before revaluating the radio conditions in order to reallocate the call traffic by using the frequency selection algorithm 3 and according to the latest values of RSCP, Ec/No and CQI. The RNC uses a timer configured per carrier, per type of user equipment and in accordance to the last radio conditions of the user equipment, in order to carry out the check of load and radio conditions in a periodical manner until the call ends 4.

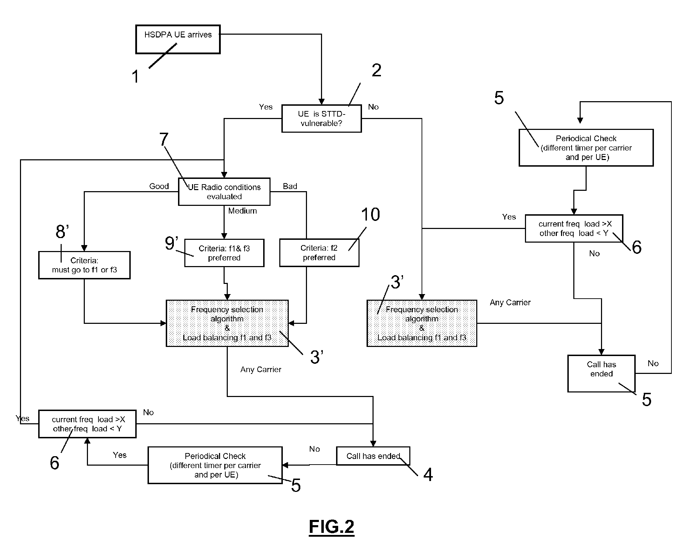

Figure 2 shows the flow diagram followed by the RNC when a HSDPA User Equipment arrives 1 to a network scenario with three carriers, f1, f2 and f3, being f1 and f3 free of MIMO traffic and f2 the carrier using STTD for MIMO diversity. The steps are the same but considering the additional carrier f3, in addition to f1, to be the carrier for traffic allocation of the HSDPA User Equipments which are vulnerable to STTD and have good radio conditions 8'. If the current operation of vulnerable to STTD HSDPA User Equipment is within medium or bad radio conditions, the carrier is chosen by the frequency selection algorithm 3' running at the RNC, which also performs load balancing between f1 and f3 in this case of three carriers, being f1 and f3 the preferred carriers for User Equipments working in medium radio conditions 9' and f2 for the ones in bad radio conditions 10.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. Method for selecting a transmission technology for communications in a wide area mobile network which provides a plurality of available radio carrier for allocating traffic of coexisting MIMO User Equipments, HSDPA User Equipments and non-HSDPA User Equipments, comprising:
- measuring radio condition parameters of the User Equipment,
- measuring load of the radio carriers,
**characterized by** comprising:
- checking whether the User Equipment is a MIMO User Equipment;
- using STTD on at least one radio carrier and allocating all existing MIMO traffic to said at least one radio carrier,
- checking whether the User Equipment is a HSDPA User Equipment of a certain category and comparing the measured radio condition parameters of the User Equipment with a first quality threshold, and
if the User Equipment belongs to a standardized category of HSDPA User Equipment identified by the operator as being vulnerable to STTD and the radio condition measurements are equal to or higher than the first quality threshold, allocating the traffic of the User Equipment to any of the remaining radio carriers free of MIMO traffic;
- if the User Equipment belongs to a standardized category of HSDPA User Equipment identified by the operator as being vulnerable to STTD and the radio conditions measurements are lower than the first quality threshold, allocating the traffic of the User Equipment to either the carrier using STTD or to any of the remaining radio carriers free of MIMO traffic depending on a relative load among carriers.

2. Method according to claim 1, wherein comparing the measured radio condition parameters of the User Equipment with the quality threshold is performed periodically.

3. Method according to claim 2, further comprising, before comparing the measured radio condition parameters of the User Equipment with the quality threshold, checking whether the load of the remaining radio carriers free of MIMO traffic is higher than the load of the carrier using STTD, and if so, reallocating the call traffic in accordance to the result of the next step of comparing the measured radio condition parameters of the User Equipment with the quality threshold.

4. Method according to any previous claim, wherein the measured radio condition parameters of the User Equipment are further compared with a second quality threshold which is lower than the first quality threshold, and
- if the User Equipment belongs to a category of HSDPA User Equipment identified by the operator as vulnerable to STTD and the radio conditions measurements are higher or equal than the second quality threshold and lower than the first quality threshold, periodically comparing the measured radio condition of the User Equipment with the two quality thresholds and periodically checking relative load among carriers, and allocating the traffic of the User Equipment to any of the carriers free of MIMO traffic unless the relative load of said carriers is higher than the load of the using STTD;
- if the User Equipment belongs to a category of HSDPA User Equipment identified by the operator as being vulnerable to STTD and the radio condition measurements are lower than the second quality threshold, allocating the traffic of the User Equipment to the carrier using STTD unless said carrier is busy.

5. Method according to any previous claim, wherein allocating the traffic of the User Equipment to any of the remaining radio carriers free of MIMO traffic, if the remaining radio carriers free of MIMO traffic are a plurality, comprising load balancing among all the radio carriers free of MIMO traffic.

6. Method according to any previous claim, wherein the category of HSDPA User Equipment corresponding to being vulnerable to STTD is selected from standardized categories 6, 7, 8 , 9 and 10.

7. Method according to any previous claim, wherein the radio condition parameters are: received signal code power (RSCP), energy per chip to noise density ratio (Ec/No) and channel quality indicator (CQI).

8. Radio network controller **characterized by** comprising processing means configured to implement the method set out in any previous claim.

9. A computer program product comprising program code means which, when loaded into processing means of a radio network controller, make said program code means execute the method according to any of claims 1-7.
